**Europäisches Patentamt**

**European Patent Office**

**Office européen des brevets**

(19)

(11) Veröffentlichungsnummer : **0 351 557 B1**

(12) # EUROPÄISCHE PATENTSCHRIFT

(45) Veröffentlichungstag der Patentschrift :
**20.05.92 Patentblatt 92/21**

(21) Anmeldenummer : **89110972.0**

(22) Anmeldetag : **16.06.89**

(51) Int. Cl.⁵ : **B66C 13/14**

(54) Schleifringfreie Stromübertragung an Krananlagen.

(30) Priorität : **16.07.88 DE 3824281**

(43) Veröffentlichungstag der Anmeldung :
**24.01.90 Patentblatt 90/04**

(45) Bekanntmachung des Hinweises auf die
Patenterteilung :
**20.05.92 Patentblatt 92/21**

(84) Benannte Vertragsstaaten :
**AT BE DE ES FR GB GR IT NL SE**

(56) Entgegenhaltungen :
**DE-A- 1 590 198**
**DE-A- 2 432 840**
**DE-A- 2 752 188**
**FR-A- 1 194 698**
**FR-A- 2 578 563**

(73) Patentinhaber : **O&K Orenstein & Koppel**
**Aktiengesellschaft**
**Brunsbütteler Damm 144-208**
**W-1000 Berlin 20 (DE)**

(72) Erfinder : **Behrend, Volkmar**
**Klaus-Groth-Strasse 5a**
**W-2407 Bad Schwartau (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine schleifringfreie Stromübertragung an Krananlagen gemäß gattungsbildendem Teil des ersten Patentanspruches.

Durch die DE-C 24 45 913 ist eine Stromführung zum Antrieb eines Zangenschließwerkes eines Zangenkranes oder zum Antrieb eines Stripperwerkes eines Stripper- oder Unvisalstripperkranes bekannt, wobei der mit der Zangenkonstruktion versehen Zangenbaum um seine Vertikalachse drehbar auf einer Traverse angeordnet ist. Zur Aufnahme der Stromkabel sind zwei oberhalb des Zangenschließ- bzw. Stripperwerkes angeordnete Mehrfachkabeltrommeln mit senkrechter Längsachse vorgesehen, wobei die eine Mehrfachtrommel undrehbar am Zangenschließ- oder Stripperwerk befestigt ist, die andere Mehrfachkabeltrommel um ihre senkrechte Achse drehbar an der Traverse gelagert und mit einer solchen Vorrichtung zum Spannen der Stromkabel verbunden ist, daß einerseits die von der undrehbar angeordneten Kabeltrommel beim Drehen des Zangenbaumes abgewickelten Kabellängen auf die drehbar gelagerte Kabeltrommel aufgewickelt und sodann gespannt gehalten werden und andererseits von der drehbar gelagerten Kabeltrommel, Kabellängen entgegen der Wirkung der Spannkraft abgewickelt und auf die undrehbar angeordnete Kabeltrommel aufgewickelt werden können. Zur Stromübertragung werden üblicherweise Schleifringe eingesetzt. Die Laufkatze ist an den Laufbahnen einer Kranbahn verlagert. Das Heben und Senken der Traverse erfolgt über Hubseile, deren eine Enden zu einer antreibbaren Seiltrommel geführt und dort befestigt sind. Die Hubeinrichtung der Traverse und die Stromzuführung über die Kabeltrommeln sind voneinander unabhängig. Nachteile der Konstruktion sind im wesentlichen darin begründet, daß bei einem eventuellen plötzlichen Laststoß im Hubseil Spannungen in der Stromzuführung auftreten können, die unter Umständen zu einer Beschädigung der Stromleitung führen.

Durch die DE-A 34 20 672 ist ferner eine Einrichtung zur Bevorratung eines Stromkabels für eine in einem unzugänglichen Raum angeordnete verfahrbare Krananlage bekannt. Die Einrichtung weist zwei vertikal übereinander angeordnete, das Stromkabel aufnehmende Umlenkglieder in Form von jeweils einer oder mehreren drehbar gelagerten Umlenkrollen auf, die relativ zueinander verstellbar geführt sind. Die hier angesprochene Einrichtung dient vorzugsweise zur Bevorratung eines Stromkabeles einer in einer heißen und somit unzugänglichen Zelle angeordneten Krananlage, die auf einer mittels Konsolen abgestützten Laufschiene verfahrbar ist und Teleskopmanipulatoren oder andere Hebezeuge trägt. Das Stromkabel selber ist durch die Schutzwand der heißen Zelle mittels einer Wanddurchführung hindurch geführt und mit dem einen Ende an einen Klemmenkasten und mit dem anderen Ende an die Krananlage angeschlossen. Diese Einrichtung dient somit nur zur allgemeinen Stromversorgung des Kranes und nicht der darunter angeordneten Hubeinrichtungen.

Der FR-A 25 78 563 ist ein Schwimmbagger mit Führung einer elektrischen Leitung zu entnehmen, die von einem Schaltkasten über einen gewichtsbelasteten Flaschenzug sowie mehreren Umlenkrollen dem Greiforgan des Schwimmbaggers zugeführt wird. Das Heben und Senken des Greiforgans erfolgt hierbei mittels Hubseilen, deren Antrieb an Deck oder aber an einer das Greiforgan führenden Brücke des Schwimmbaggers vorgesehen sind.

Die DE-A 24 32 840 betrifft eine Stromzuführung zu einem Heuaufzug mit Selbstgreiferzange, wobei sowohl die elektrische Leitung als auch das Hubseil analog zur FR-A 25 78 563 geführt werden.

Nachteilig bei diesen Druckschriften ist festzustellen, daß infolge der separaten Führung der elektrischen Leitungen sowie der Hubseile Schläge im Hubseil unmittelbar auch in die Elektroleitung eingehen und somit über das Ausgleichsgewicht zu Störungen am Schaltkasten und/oder an der Verlagerung des Greiforgans führen können.

Schließlich ist der FR-C 11 94 698 eine Einrichtung zur Führung von elektrischen Leitungen in und an auf Schienen verfahrbaren Fahrzeugen zu entnehmen, die mittels stirnseitig vorgesehener Zugkabel bewegbar sind. Die elektrischen Leitungen werden von außen in den Bereich des Fahrzeuges geführt und dort über mehrere auf Horizontalachsen vorgesehenen Scheiben umgelenkt. Ein Bezug zu Krananlagen bzw. Hubseilen ist hierbei nicht gegeben.

Der Erfindung liegt die Aufgabe zugrunde, eine schleifringfreie Stromübertragung gemäß gattungsbildendem Teil des 1. Patentanspruches dahingehend weiterzubilden, daß einerseits ein einfacher konstruktiver Aufbau erzielt wird und andererseits Beschädigungen der Stromleitung(en) bei eventuellen Laststößen im Hubseil vermieden werden.

Diese Aufgabe wird erfindungsgemäß durch die Kombination folgender Merkmale gelöst:
– die Verlagerung der Umlenkrollen ist in Abhängigkeit von der Hubgeschwindigkeit des Hubwerkes mittels eines die Umlenkrollen aufnehmenden auf Schienen verfahrbaren Rollenwagens herbeiführbar
– am Rollenwagen ist mindestens eine weitere Umlenkrolle angeordnet, wobei ein Zugseil mit Festpunkt am Rollenwagen über diese Umlenkrolle sowie mindestens eine außerhalb des Rollenwagens starr angeordnete Umlenkrolle zu einer mit dem Hubwerk verbundenen Zugtrommel führbar ist.

Indem das bzw. die Hubseile sowie eine oder mehrere Stromleitungen mit im wesentlichen gleicher Senkgeschwindigkeit bzw. Hubgeschwindigkeit bewegbar sind, sind Beschädigungen, die eventuell durch Laststöße im Hubseil auftreten können, nahzu ausgeschlossen. Die stationären sowie die relativ dazu bewegbaren Umlenkrollen, dienen als Speicher für mindestens eine Stromleitung, wobei die Stromleitung unter leichter Vorspannung in jedem Betriebszustand gehalten werden kann. Die Verschiebung der Umlenkrollen erfolgt in Abhängigkeit von der Hubgeschwindigkeit des Hubseiles. Durch den Einsatz einfacher mechanischer Bauteile zur Stromübertragung können beschädigungsanfällige Bauteile, wie Schleifringe, Bürsten und dgl. entfallen. Die Wartung stellt sich wesentlich einfacher dar, da sämtliche Bauteile problemlos erreichbar sind.

Die stationären sowie die relativ dazu verschiebbaren Umlenkrollen sind vorzugsweise jeweils auf einer horizontalen Achse gelagert. Dies hängt insbesondere mit dem Aufbau der Krananlagen zusammen, da in horizontaler Richtung überlicherweise mehr Platz vorhanden ist als in vertikaler. Alternativ dazu besteht natürlich bei anderer Bauweise von Kranen ebenfalls die Möglichkeit, die zum Speichern der Stromleitung dienenden Elemente in vertikaler Richtung zu ordnen.

Einem weiteren Gedanken der Erfindung gemäß ist die Verschiebung der Umlenkrollen mittels eines. in Abhängigkeit von der Hubgeschwindigkeit des Hubwerkes auf Schienen verfahrbaren und die Umlenkrollen aufnehmenden Rollenwagens herbeiführbar. Am Rollenwagen ist vorzugsweise mindestens eine weitere Umlenkrolle angeordnet, wobei ein Zugseil mit Festpunkt am Rollenwagen über diese Umlenkrolle sowie mindestens eine außerhalb des Rollenwagens starr angeordnete Umlenkrolle zu einer mit der Hubtrommel verbundenen Zugtrommel führbar ist. Diese Zugtrommel sitzt auf der Drehachse der Hubtrommel und weist einen wesentlich kleineren Durchmesser als diese auf. Dadurch, daß die Zugtrommel auf der gleichen Drehachse wie die Hubtrommel sitzt, läuft diese mit der Hubtrommel um, wobei über das Hubseil sowie die am Rollenwagen angeordneten Umlenkrollen in Verbindung mit den stationären Umlenkrollen für das bzw. die Stromleitungen ein ständig im Gleichgewicht bestehendes System gebildet wird. Hubbewegungen der Greifvorrichtungen werden unmittelbar über die Zugtrommel, das Zugseil, die Umlenktrommeln auf die Stromleitung übertragen, so daß selbst bei auftretenden Stößen im Hubseil keine größeren Zugkräfte auf die Stromleitung(en) ausgeübt werden.

Sollte bei unerwartet hohen Stößen die Mechanik diese nicht in gleicher Weise umsetzen können, sowird einem weiteren Gedanken der Erfindung gemäß vorgeschlagen, die Stromleitung(en) im Bereich ihrer zweiten Position elastisch zu lagern bzw. zu halten. Dies kann vorzugsweise dergestalt ausgeführt werden, daß die Stromleitung(en) mittels einer Feder elastisch gelagert wird, wobei das eine Ende der Feder die Stromleitung(en) umgibt und das andere Ende der Feder im Bereich der Greifvorrichtung befestigt ist.

Durch die erfindungsgemäße Ausbildung der schleifringfreien Stromübertragung wird nicht nur eine größere Betriebssicherheit gewährleistet, sondern darüberhinaus auch preiswertere Konstruktion erzielt. Die Umlenkrollen werden der Einfachheit halber antriebsfrei ausgebildet, d.h. sie werden lediglich, z.B. über Kugellager, auf den jeweiligen Achsen gelagert. Für besondere Einsatzfälle besteht jedoch auch die Möglichkeit, an vorgegebenen Stellen Fremdantriebe zum Antrieb der Umlenkrollen vorzusehen.

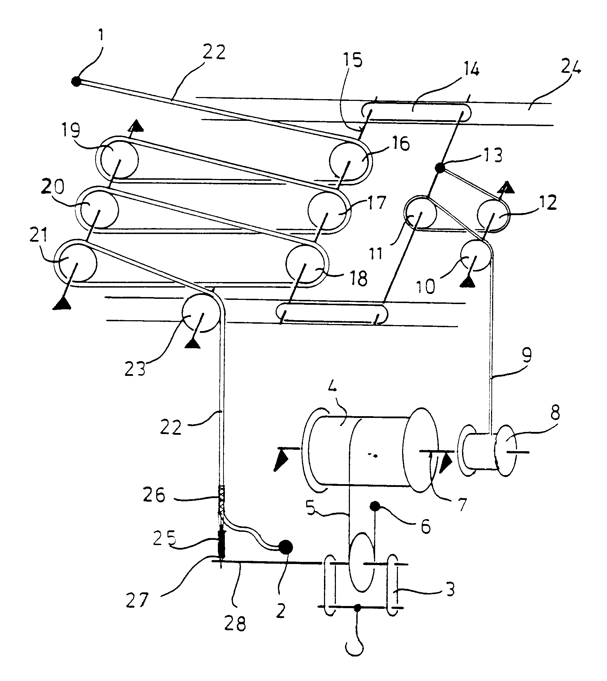

Die Erfindung ist in der Zeichnung anhand eines Ausführungsbeispieles dargestellt und wird wie folgt beschrieben.

Das Ausführungsbeispiel zeigt die Stromführung von einer 1. Position 1, einer nicht weiter dargestellten Krananlage zu einer Position 2 einer Greifvorrichtung 3. Die Greifvorrichtung 3 wird mittels eines Hubwerkes 4 über ein Hubseil 5 auf- und abwärts bewegt, wobei das Hubseil 5 einerseits an einem Festpunkt 6 verlagert ist und andererseits von der Hubtrommel 4 abgewickelt bzw. auf diese aufgewickelt wird. Auf der Drehachse 7 der Hubtrommel 4 ist eine Zugtrommel 8 angeordnet. Von dieser Zugtrommel 8 wird ein Zugseil 9 im wesentlichen vertikal zu weiteren Umlenkrollen 10,11,12 sowie einem weiteren Festpunkt 13 geführt. Die Umlenkrolle 11 sowie der Festpunkt 13 sind an einem, im wesentlichen in horizontaler Richtung verfahrbaren Rollenwagen 14 vorgesehen. Am Rollenwagen 14 sind auf einer Achse 15 weitere Umlenkrollen 16,17 und 18 drehbar angeordnet, die mit stationären Umlenkrollen 19,20 und 21 zwecks Umlenkung der Stromleitung 22 zusammenwirken. Die Stromleitung 22 wird somit ausgehend von der Position 1 über die Umlenkrollen 16,19,17,20,18,21 sowie eine weitere Umlenkrolle 23 in den Bereich der Position 2 geführt. Der Rollenwagen 14 verfährt in einer Rollenwagenschiene 24. Durch die Anordnung der Zugtrommel 8 auf der Drehachse 7 der Hubtrommel 4 entspricht die Senkgeschwindigkeit der Stromleitung 22 in jedem Betriebszustand der Greifvorrichtung 3 der Hubgeschwindigkeit der Hubtrommel 4. Stöße im Hubseil 5 werden über das Zugseil 9, den Rollenwagen 14 sowie die damit zusammenwirkenden Umlenkrollen 11,16,17 und 18 im wesentlichen ausgeglichen. Im Bereich der Position 2 wird die Stromleitung dergestalt elastisch gehalten, daß zwischen einer Verlängerung 28 der Greifvorrichtung 3 und der Stromleitung 22 sich eine Feder 25 erstreckt. Die Feder 25 umschließt die Stromleitung einerseits 26 und ist andererseits an der Verlängerung 28 befestigt 27.

**Patentansprüche**

1. Schleifringfreie Stromübertragung an Krananlagen von einer im wesentlichen stationären zu einer relativ dazu beweglichen Einrichtung (3), insbesondere zu Greifvorrichtungen an Hubwerken, wie Spreader, Drehhaken, Greifer oder dgl., wobei mindestens eine Stromleitung (22) mittels mehrerer stationärer (19,20,21) sowie relativ dazu verschiebbarer Umlenkrollen (16,17,18) von einer ersten Position (1) zu einer zweiten Position (2) führbar ist und die Senkgeschwindigkeit der Stromleitung (22) der Hubgeschwindigkeit des Hubwerkes (4) entspricht, gekennzeichnet durch die Kombination folgender Merkmale
   – die Verlagerung der Umlenkrollen (16,17,18) ist in Abhängigkeit von der Hubgeschwindigkeit des Hubwerkes (4) mittels eines die Umlenkrollen (16,17,18) aufnehmenden auf Schienen (24) verfahrbaren Rollenwagens (14) herbeiführbar
   – am Rollenwagen (14) ist mindestens eine weitere Umlenkrolle (11) angeordnet, wobei ein Zugseil (9) mit Festpunkt (13) am Rollenwagen (14) über diese Umlenkrolle (11) sowie mindestens eine außerhalb des Rollenwagens (14) starr angeordnete Umlenkrolle (10,12) zu einer mit dem Hubwerk (4) verbundenen Zugtrommel (8) führbar ist.

2. Schleifringfreie Stromübertragung nach Anspruch 1, dadurch gekennzeichnet, daß die stationären (19,20,21) und die dazu verschiebbaren Umlenkrollen (16,17,18) jeweils auf einer horizontalen Achse (15) gelagert sind.

3. Schleifringfreie Stromübertragung nach den Ansprüchen 1 und 2, dadurch gekennzeichnet, daß die Zugtrommel (8) auf der Drehachse (7) der Hubtrommel (4) befestigt ist.

4. Schleifringfreie Stromübertragung nach den Ansprüchen 1 bis 3, dadurch gekennzeichnet, daß die Stromleitung (22) im Bereich ihrer zweiten Position (2) elastisch gelagert bzw. gehalten ist.

5. Schleifringfreie Stromübertragung nach den Ansprüchen 1 bis 4, dadurch gekennzeichnet, daß die elastische Lagerung bzw. Halterung durch eine Feder (25) gebildet ist, die die Stromleitung (22) einerseits umgibt (26) und andererseits im Bereich (28) der Greifvorrichtung (3) befestigt ist (27).

**Claims**

1. Current transmission without slip rings for crane installations from a substantially stationary device to a device (3) movable relative thereto, especially to grab devices on hoisting mechanisms, such as spreaders, swivel hooks, grabs or the like, at least one current tine (22) being able to be led by means of a plurality of fixed deflecting pulleys (19,20,21) and deflecting pulleys (16,17,18) movable relative thereto, from a first position (1) to a second position (2), and the lowering speed of the current line (22) corresponding to the hoisting speed of the hoisting mechanism (4), characterised by the combination of the following features
   – the displacement of the deflecting pulleys (16,17,18) can be brought about in response to the hoisting speed of the hoisting mechanism (4) by means of a pulley carriage (14) movable on rails (24) and accommodating the deflecting pulleys (16,17,18)
   – at least one further deflecting pulley (11) is arranged on the pulley carriage (14), a traction cable (9) with its fixed point (13) on the pulley carriage (14) being able to be led by way of this deflecting pulley (11) and at least one deflecting pulley (10,12) rigidly arranged outside the pulley carriage (14) to a traction drum (8) connected to the hoisting mechanism (4).

2. Current transmission without slip rings according to Claim 1, characterised in that the fixed deflecting pulleys (19,20,21) and the deflecting pulleys (16,17,18) movable with respect thereto are in each case supported on a horizontal shaft (15).

3. Current transmission without slip rings according to Claims 1 and 2, characterised in that the traction drum (8) is attached to the rotation axis (7) of the hoisting drum (4).

4. Current transmission without slip rings according to Claims 1 to 3, characterised in that the current line (22) is resiliently supported or held in the region of its second position (2).

5. Current transmission without slip rings according to Claims 1 to 4, characterised in that the resilient supporting or retaining means is formed by a spring (25) which on the one hand surrounds(26)the current line (22) and on the other hand is fastened in the region (28) of the grab device (3).

**Revendications**

1. Transmission de courant sans bagues collectrices à des installations de grues, d'un dispositif essentiellement stationnaire à un dispositif (3) mobile par rapport au précédent, notamment à des dispositifs de préhension sur des dispositifs de levage, tels que des palonniers-agrippeurs, des crochets rotatifs, des preneurs ou similaires, au moins une ligne électrique (22) pouvant être amenée d'une première position (1) à une seconde position (2) en passant par plusieurs poulies de renvoi stationnaires (19,20,21) et par plusieurs poulies de renvoi (16,17,18) déplaçables en translation par rapport aux précédentes, et la vitesse d'abaissement de la ligne électrique (22) correspondant à la vitesse de levage du dispositif de levage (4), caractérisée par la combinaison des caractéristiques suivantes:

    – le déplacement des poulies de renvoi (16,17,18) peut être produit, en fonction de la vitesse de levage du dispositif de levage (4), à l'aide d'un chariot roulant (14) mobile sur des rails (24), qui reçoit les poulies de renvoi (16,17,18),

    – au moins une poulie de renvoi supplémentaire (11) est disposée sur le chariot roulant (14), un câble de traction (9) présentant un point fixe (13) sur le chariot roulant (14) pouvant être amené, en passant par cette poulie de renvoi (11) et par au moins une poulie de renvoi (10,12) disposée fixement en dehors du chariot roulant (14), à un tambour de traction (8) relié au dispositif de levage (4).

    2. Transmission de courant sans bagues collectrices selon la revendication 1, caractérisée en ce que les poulies de renvoi stationnaires (19,20,21) et les poulies de renvoi (16,17,18) déplaçables en translation par rapport aux précédentes sont respectivement disposées sur un axe horizontal (15).

    3. Transmission de courant sans bagues collectrices selon la revendication 1 ou 2, caractérisée en ce que le tambour de traction (8) est fixé sur l'axe de rotation (7) du tambour de levage (4).

    4. Transmission de courant sans bagues collectrices selon l'une des revendications 1 à 3, caractérisée en ce que la ligne électrique (22) est montée ou maintenue élastiquement dans la région de sa seconde position (2).

    5. Transmission de courant sans bagues collectrices selon l'une des revendications 1 à 4, caractérisée en ce que le montage ou maintien élastique est constitué par un ressort (25), dont une extrémité entoure (26) la ligne électrique (22) et dont l'autre extrémité est fixée dans la région (28) du dispositif de préhension (3).